# EUROPÄISCHE PATENTANMELDUNG

(11) **EP 1 209 012 A2**
(43) Veröffentlichungstag der Anmeldung: **29.05.2002**
(21) Anmeldenummer: 01126589.9
(22) Anmeldetag: 16.11.2001
(51) Int. Cl.: B60H 1/34

(54) **Luftaustrittsdüse für Belüftungsanlagen**

(30) Priorität: 23.11.2000 DE 10058033
(71) Anmelder: TRW Automotive Electronics & Components GmbH & Co. KG, 67677 Enkenbach/Alsenborn (DE)
(72) Erfinder: Demerath, Michael, 66909 Hüffler (DE)
(74) Vertreter: Degwert, Hartmut, Dipl.-Phys.

(57) **Zusammenfassung**

Die Luftaustrittsdüse für Belüftungsanlagen, insbesondere in Fahrzeugen, hat ein frontseitiges Austrittsgitter (10), das raumfest angeordnet ist. Eine Vielzahl von parallelen Luftleitelementen (12) sind jeweils mit einem Ende an dem Austrittsgitter (10) und mit dem gegenüberliegenden Ende an einem beweglichen Lagergitter (14) schwenkbar gelagert.

## Beschreibung

Die Erfindung betrifft eine Luftaustrittsdüse für Belüftungsanlagen, insbesondere in Fahrzeugen, mit einem frontseitigen Austrittsgitter.

Derartige Luftaustrittsdüsen müssen eine Reihe von Forderungen erfüllen. In funktioneller Hinsicht wird eine Variation der Strömungsrichtung über einen großen Raumwinkel erwartet. Die Herstellung der Strömungsrichtung soll manuell nach einem klaren und ergonomisch günstigen Bewegungsschema erfolgen. Bei Anwendung in Fahrzeugen wird eine klapperfreie Ausführung verlangt. Da Luftaustrittsdüsen oft im Blickfeld angeordnet werden müssen, haben sie einen prägenden Einfluß auf das Erscheinungsbild der Oberfläche, deren Bestandteil sie sind.

Herkömmliche Luftaustrittsdüsen können diese Forderungen nur teilweise erfüllen.

Durch die Erfindung wird eine Luftaustrittsdüse für Belüftungsanlagen, insbesondere in Fahrzeugen, geschaffen, die ein frontseitiges Austrittsgitter aufweist, das raumfest angeordnet ist. Eine Vielzahl von parallelen Luftleitelementen sind jeweils mit einem Ende an dem Austrittsgitter schwenkbar gelagert. Die Luftleitelemente sind jeweils mit dem gegenüberliegenden Ende an einem beweglichen Lagergitter schwenkbar gelagert. Das bewegliche Lagergitter wird durch die Luftleitelemente parallel zu und im Abstand von dem frontseitigen Austrittsgitter gehalten. Durch ein an dem beweglichen Lagergitter angreifendes Bedienelement können die Luftleitelemente gemeinsam stufenlos in allen Richtungen über einen großen Raumwinkel verschwenkt werden. Der Strömungswiderstand wird durch die Stellung der Luftleitelemente kaum beeinflußt. Von besonderem Vorteil ist, daß durch die Verwendung eines raumfesten frontseitigen Austrittsgitters das Erscheinungsbild der Luftaustrittsdüse unabhängig von der Stellung der Luftleitelemente stets dasselbe ist.

Bei der bevorzugten Ausführungsform sind die Luftleitelemente durch angeformte Kugelgelenke an den beiden Gittern gelagert. Das Bedienelement ist vorzugsweise ein Bedienhebel mit einem aus dem frontseitigen Austrittsgitter herausragenden Bedienknopf. Der Bedienhebel ist vorzugsweise an dem frontseitigen Austrittsgitter durch ein Kugelgelenk gelagert und greift über ein weiteres Kugelgelenk an dem beweglichen Lagergitter an. Durch diese Anordnung wird die Betätigungsbewegung des Bedienhebels unmittelbar auf die Luftleitelemente übertragen.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
Figur 1 eine schematische Perspektivansicht der Luftaustrittsdüse; und
Figur 2 eine Explosionsansicht der Luftaustrittsdüse;
Figur 3 eine vergrößerte Detailansicht eines Luftleitelements mit Lagerteilen; und
Figur 4 eine alternative Ausführungsform eines Luftleitelements.

Die Luftaustrittsdüse besteht aus einem frontseitigen Austrittsgitter 10, einer Vielzahl von Luftleitelementen 12 und einem beweglichen Lagergitter 14. Das frontseitige Austrittsgitter 10 wird raumfest angeordnet, beispielsweise in der Armaturentafel eines Fahrzeugs. Die Luftleitelemente 12 haben jeweils vier rechtwinklig zueinander angeordnete Leitflügel, die sich in Axialrichtung erstrecken und frei umströmt werden können. Ferner haben die Luftleitelemente 12 an den beiden axialen Enden je ein angeformtes Kugelelement 12a, 12b, das mit entsprechend geformten Lagerpfannen 10a bzw. 14a in dem frontseitigen Austrittsgitter 10 und dem beweglichen Lagergitter 14 jeweils ein Kugelgelenk bildet. Die Luftleitelemente 12 sind durch Schnappsitz in den Kugelgelenken gehalten. Durch die Kugelgelenke sind sie gemeinsam allseitig über einen großen Raumwinkel verschwenkbar. Zugleich sind die Luftleitelemente durch an den Kugelelementen 12b angeformte Zapfen 12c, die in entsprechende Schlitze 14c der Lagerpfannen 14a eingreifen, gegen Drehung um ihre Längsachse gesichert. Ein Bedienhebel 16 ist mit einer angeformten Lagerkugel 16a in einer entsprechenden Lagerpfanne des frontseitigen Austrittsgitters 10 allseitig verschwenkbar gelagert und mit einem weiteren angeformten Kugelteil 16b über eine Lagerpfanne 14b schwenkbar an das bewegliche Lagergitter 14 gekoppelt. Das frontseitige Ende des Bedienhebels 16 ragt aus dem Austrittsgitter 10 heraus und trägt einen Bedienknopf 16c. Die Luftleitelemente 12 werden durch die Kugelgelenke zwischen dem Austrittsgitter 10 und dem beweglichen Lagergitter 14 parallel zueinander und in festen Abständen voneinander gehalten; andererseits wird das bewegliche Lagergitter 14 durch die Luftleitelemente 12 parallel zu und im Abstand von dem frontseitigen Austrittsgitter 10 gehalten. Durch den am beweglichen Lagergitter 14 angreifenden Bedienhebel 16 können die Luftleitelemente 12 gemeinsam in allen Richtungen über einen großen Raumwinkel verschwenkt werden.

Bei der gezeigten Ausführungsform besteht das frontseitige Austrittsgitter 10 aus horizontalen und vertikalen Stegen, die frontseitig gewölbt sind. Auch das bewegliche Lagergitter 14 besteht aus horizontalen und vertikalen Stegen. Die vorgeschlagene Ausbildung und Lagerung der Luftleitelemente 12 ermöglicht aber eine abweichende Gestaltung beider Gitter, insbesondere des frontseitigen Austrittsgitters, das frei nach den gestalterischen Vorgaben konzipiert werden kann.

Alle Bestandteile der Luftaustrittsdüse können aus Kunststoff durch Spritzgießen gefertigt werden. Der Zusammenbau aller Bestandteile der Luftaustrittsdüse ist einfach zu bewerkstelligen, da lediglich die Kugelteile an den Luftleitelementen in die entsprechenden Lagerpfannen der beiden Gitter eingedrückt werden.

Bei einer alternativen Ausführungsform sind die Luftleitelemente mit den beiden Gittern durch Drehgelenke gekoppelt, die eine Drehung um zwei zueinander senkrecht stehende Drehachsen ermöglichen. Diese Drehgelenke können insbesondere durch Filmgelenke gebildet werden.

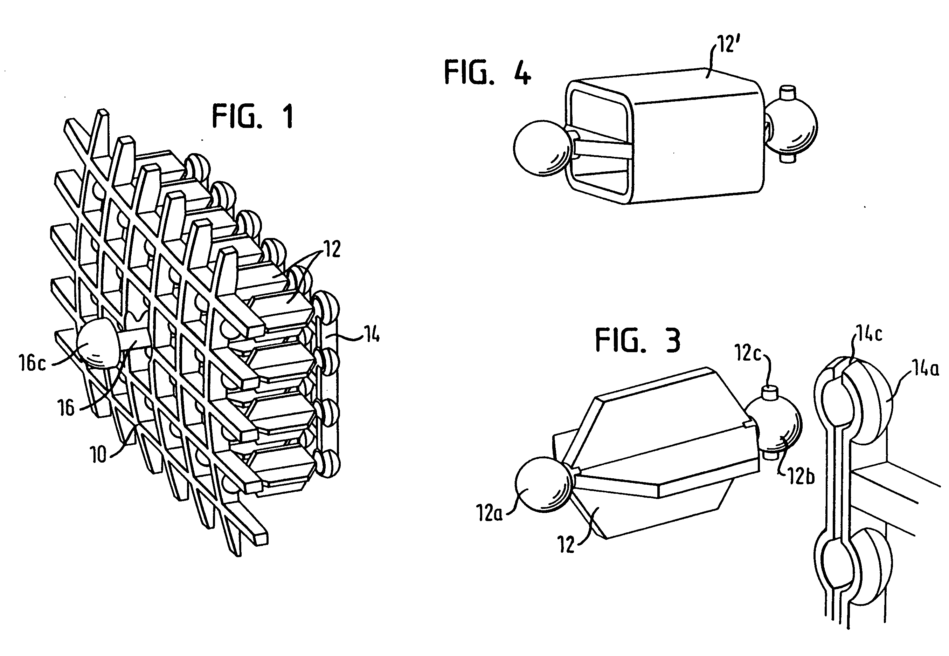

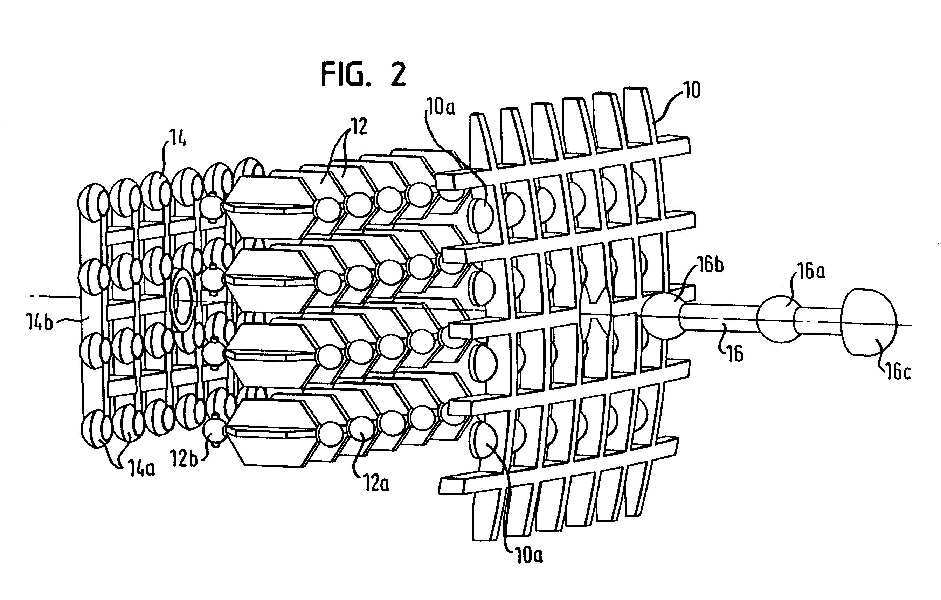

Bei der in Figur 4 gezeigten Ausführungsform sind die Luftleitelemente (12) durch Hohlkörper von im wesentlichen quadratischer Querschnittsform gebildet.

## Patentansprüche

1. Luftaustrittsdüse für Belüftungsanlagen, insbesondere in Fahrzeugen, mit einem frontseitigen Austrittsgitter, **dadurch gekennzeichnet, daß**
- das frontseitige Austrittsgitter raumfest angeordnet ist;
- eine Vielzahl von parallelen Luftleitelementen jeweils mit einem Ende an dem Austrittsgitter schwenkbar gelagert sind;
- die Luftleitelemente jeweils mit dem gegenüberliegenden Ende an einem beweglichen Lagergitter schwenkbar gelagert sind.

2. Luftaustrittsdüse nach Anspruch 1, **dadurch gekennzeichnet, daß** die Luftleitelemente allseitig frei umströmbare Leitflügel aufweisen.

3. Luftaustrittsdüse nach einem der vorstehenden Ansprüche, **dadurch gekennzeichnet, daß** die Luftleitelemente durch ein an dem Lagergitter angreifendes Bedienelement gemeinsam verschwenkbar sind.

4. Luftaustrittsdüse nach Anspruch 3, **dadurch gekennzeichnet, daß** das Bedienelement in dem frontseitigen Austrittsgitter schwenkbar gelagert ist.

5. Luftaustrittsdüse nach Anspruch 3 oder 4, **dadurch gekennzeichnet, daß** das Bedienelement durch ein Kugelgelenk mit dem Lagergitter gekoppelt ist.

6. Luftaustrittsdüse nach einem der Ansprüche 3 bis 5, **dadurch gekennzeichnet, daß** das Bedienelement einen aus dem frontseitigen Austrittsgitter herausragenden Bedienknopf aufweist.

7. Luftaustrittsdüse nach einem der vorstehenden Ansprüche, **dadurch gekennzeichnet, daß** die Luftleitelemente durch Kugelgelenke gelagert sind.

8. Luftaustrittsdüse nach Anspruch 7, **dadurch gekennzeichnet, daß** die Kugelgelenke durch an den Luftleitelementen angeformte Gelenkkugeln und in die Gitter eingeformte Lagerpfannen gebildet sind.

9. Luftaustrittsdüse nach Anspruch 8, **dadurch gekennzeichnet, daß** die Gelenkkugeln durch Schnappsitz in den Gelenkpfannen gehalten sind.

10. Luftaustrittsdüse nach einem der vorstehenden Ansprüche, **dadurch gekennzeichnet, daß** die Luftleitelemente durch Drehgelenke gelagert sind, die eine Drehung um zwei zueinander senkrechte Achsen zulassen.

11. Luftaustrittsdüse nach Anspruch 10, **dadurch gekennzeichnet, daß** die Drehgelenke durch Filmgelenke gebildet sind.

12. Luftaustrittsdüse nach einem der vorstehenden Ansprüche, **dadurch gekennzeichnet, daß** die Luftleitelemente an wenigstens einem ihrer Enden drehfest gehalten sind.

13. Luftaustrittsdüse nach Anspruch 12, **dadurch gekennzeichnet, daß** die Luftleitelemente Lagerteile mit angeformten Zapfen aufweisen, die in entsprechende Schlitze der Gegenlagerteile eingreifen.

14. Luftaustrittsdüse nach einem der vorstehenden Ansprüche, **dadurch gekennzeichnet, daß** die Luftleitelemente durch rohrförmige Hohlkörper gebildet sind.

15. Luftaustrittsdüse nach Anspruch 14, **dadurch gekennzeichnet, daß** die Hohlkörper im wesentlichen quadratische Querschnittsform aufweisen.
